# EUROPÄISCHE PATENTSCHRIFT

(11) **EP 1 780 453 B1**
(45) Veröffentlichungstag und Bekanntmachung des Hinweises auf die Patenterteilung: **12.03.2008**
(21) Anmeldenummer: 05110215.0
(22) Anmeldetag: 31.10.2005
(51) Int. Cl.: F16K 31/08, B67D 3/04

(54) **Getränke-Ausgabesystem**
Beverage dispensing system
Système de distribution de boissons

(43) Veröffentlichungstag der Anmeldung: 02.05.2007
(73) Patentinhaber: WOLFGANG JOBMANN GMBH, 22587 Hamburg (DE)
(72) Erfinder: JOBMANN, Wolfgang, 22587 Hamburg (DE)
(74) Vertreter: Leonhard, Frank Reimund

(56) Entgegenhaltungen:
- EP-A- 0 101 130
- EP-A- 1 350 757
- DE-A1- 3 822 793
- DE-A1- 10 128 404
- US-A- 4 349 042

## Beschreibung

Die Erfindung betrifft ein Verfahren zum Betreiben eines Getränke-Ausgabesystems, bei dem ein Behälter vorgesehen ist, der ein gespeichertes Getränk aufnimmt oder - in unbefülltem Zustand - zur Aufnahme eines solchen Getränkes vorgesehen ist, also geeignet und bestimmt ist, ein solches Getränk zu speichern.

Es gibt im Stand der Technik zumindest drei verschiedene Arten der Getränkespeicherung, bzw. drei verschiedene Systeme, mit denen Getränke gespeichert werden, das Premix-Prinzip, das Postmix-Prinzip sowie ein Bag-in-Box-Prinzip. Im Bereich der Postmix-Dispenser sowie Bag-in-Box-Dispenser werden Magnetventile bereits eingesetzt. Dabei wirkt ein aktiver Elektromagnet auf ein passiv beeinflusstes magnetisches Element, welches als Ventil den Dispenser steuert. Das passiv wirkende Element ist beispielsweise aus Stahl, um magnetisierbar zu sein, also von Magnetkräften (magnetische Feldlinien) bewegt werden zu können, und gleichzeitig brauchbare hygienische Anforderungen zu erfüllen.

Im hier bevorzugten Bereich der Premix-Getränkedispenser (siehe z.B. EP-A-101 130) wird ein Fertiggetränk in dem Behälter gekühlt bereitgehalten, fertig zur Abgabe an einen Verbraucher, der dieses gekühlte Premix-Getränk nach Wunsch aus dem Behälter zapfen kann. Es gibt derzeit im wesentlichen zwei verschiedene Systemarten, welche die Getränkeausgabe bei dem Premix-Getränkedispenser steuert.
(a) Ein Ausgabeschlauch wird in einen vorhandenen Ausgabekanal des Getränkebehälters eingeführt und dabei an seinem Umfang an der Einführstelle abgedichtet. Üblicherweise ist dieser Abgabeschlauch flexibel, beispielsweise aus Silikon gefertigt, und kann mit einem Absperrriegel an einer schmalen Stelle durch Druck verschlossen werden. Der Absperrriegel steht unter der Krafteinwirkung einer Feder und kann vom Verbraucher bewegt werden, in dem ein Hebel betätigt wird, der die Federwirkung löst, den unter Vorspannung stehenden Schlauch öffnet und die Getränkeentnahme veranlasst.
(b) Ein Schwerkraft-Ventilstück kann alternativ ein Ausgaberohr über eine umlaufende Ventildichtung am oberen Ende des Rohres abdichten. Das Schwerkraft-Ventil kann beispielsweise aus Edelstahl gefertigt sein, um hygienischen Anforderungen zu entsprechen und liegt aufgrund seines Gewichtes auf oder über dem Ausgabekanal, respektive dem oberen Ende des Ausgaberohrs, welches den Ausgabekanal des Getränkebehälters definiert. Dort dichtet es ab und kann durch einen vom Verbraucher betätigten Hebel angehoben werden. Durch die Anhebung des Schwerkraft-Ventils wird das Ausgaberohr freigegeben. Es wird dabei in seiner physischen Gestalt nicht verändert, zusammengerückt oder entlastet, sondern dient lediglich als im Querschnitt gleichbleibender Strömungsweg.

Beide Systeme haben einerseits Vorteile, wie auch andererseits Nachteile. Der elastisch nachgiebige Ausgabeschlauch ist für die Verschlusssicherheit eine bevorzugte Alternative, erfordert bei der hygienischen Zuverlässigkeit aber besondere Sorgfalt. Leckagen und ungewollte Entleerungen des Behälters werden mit dem elastisch nachgiebigen Ausgabeschlauch zuverlässig vermieden, möchte man aber die Hygiene bevorzugen, so bietet das Schwerkraft-Ventil eine hier scheinbar günstigere Lösung an, da es zumeist aus Edelstahl gefertigt ist und bis auf die Dichtung am oberen Ende des Ausgabekanal hygienisch einwandfrei zu reinigen ist. Das Problem liegt aber darin, dass das Öffnen des Schwerkraft-Ventils durch Anheben des inneren Ventilelements, den Fließweg für das Getränk nicht nur zum Ausgaberohr freigibt, sondern auch zwischen dem Ventil und der Wandung des Ausgabekanals parasitäre Strömungen auftreten, die zu hygienischen Beeinträchtigungen führen können. Diese werden durch ungekühlte Getränkereste gebildet, die sich während eines mehrstündigen Betriebs eines so mit Ventilstück ausgestalteten Premix-Dispenser bilden und die genannten hygienischen Probleme hervorrufen können, zumindest könnten.

Der Erfindung liegt **die Aufgabe zugrunde**, ein Premix-Dispensersystem vorzuschlagen, das es ermöglicht, ein im gefüllten Getränkebehälter befindliches Verschließelement mit einem außerhalb des Getränkebehälters befindlichen Steuerelement über Magnetkraft so zu koppeln, und zwar durch die Wand des Getränkedispensers hindurch, dass bei einem Anheben des äußeren Steuerelements das innere Ventilelement gleichfalls angehoben wird. Das Anheben öffnet den Kanal oder Fließweg für die Getränkeentnahme. Danach soll dieser Fließweg aber wieder verschlossen werden können und bei Freigabe durch das äußere Steuerelement soll das innere Ventilelement selbsttätig die Getränkeausgabe wieder verschließen. Mit anderen Worten soll trotz einer von außen einwirkenden, bevorzugt hohen Magnetkraft auf das inneren Ventilelement dieses selbsttätig nach Freigabe durch das äußere Element wieder absenken können und die Ausgabeöffnung ventilmäßig dichtend verschließen.

Die Aufgabe wird dadurch gelöst, dass das inneren Schließstück (das Ventilelement) und das äußere Betätigungsstück (das Steuerelement) beide abrollend oder abrollfähig ausgebildet sind, um an der sie trennenden Wand in einer vertikalen Richtung bewegt werden zu können. Diese "runden Magnete", welche über eine magnetische Kraft (genau: die von einem äußeren Magnet ausgehenden Feldlinien) gekoppelt sind, können innen und außen an der Wandung des Getränkebehälters rollend und damit ohne großen Reibungswiderstand bewegt werden. Trotz einer einzusetzenden hohen Magnetkraft für eine gute Kopplung kann das Absenken des inneren Schließstücks sichergestellt werden, wobei mechanische Wandstärken von oberhalb 1,5 mm eingesetzt werden können, bis hin zu einer Stärke von 2,5 mm bis 3 mm. Je stärker die Wand ist, desto stärker muß zur Übertragung der Bewegung auf das innere Schließstück auch die Magnetkraft sein.

Bevorzugt wird das durch einen äußeren Magneten und einen inneren Magneten erreicht, die beide an der magnetischen Kopplung gemeinsam mitwirken, und durch ihre physische Ausbildung der abrollenden oder abrollfähigen äußeren Oberfläche dennoch geeignet sind, den Reibungswiderstand bei der Absenkbewegung nicht zu groß werden zu lassen (Anspruch 12).

Der Einsatz eines zumindest wandseitig flachen Aktiv-Magneten auf der Außenseite, der mit seiner Flachseite satt und großflächig auf der äußeren Oberfläche der Behälterwand (als Trennwand) anliegt und eines ebenso flachen, gegenüberliegenden inneren Schließstücks auf der Innenseite der Wand des Behälters sorgt zwar für die gewünschte Anziehungskraft, die hier sehr groß werden, vernachlässigt aber die Möglichkeit der selbsttätigen Absenkung des inneren Schließstücks aufgrund der entstehenden hohen Reibungswiderstände an der Oberfläche. Durch die flachen Seiten wird zwar der eine Effekt der gewünschten Kopplung vergrößert, aber der andere Effekt praktisch unmöglich. Aufgrund der entstehenden Reibungswiderstände an den Oberflächen bleibt das innere Schließelement in seiner angehobenen Lage stehen und kann den Ausgabekanal nicht mehr schließen. Wählt man die Mischung aus einem aktiven Magneten (an der Außenseite) und einem magnetisierbaren Schließelement auf der Innenseite (einem Passiv-Magnetelement) ist die aufzubringende Kraft für die Anhebung meist nicht ausreichend, wenn große Wandstärken mit den Magnetfeldern zu durchdringen sind.

Meist wird man mechanisch eine solche Lösung wählen, bei der das abrollfähige äußere Betätigungsstück mit einem Hebel angehoben wird, der vom Benutzer betätigt wird, nur hat das Verschließen der Getränkeausgabe selbsttätig zu erfolgen, ohne dass der Benutzer eine entsprechende Kraft in der Schließrichtung aufbringt. Eine Beendigung des Hebeldrucks auf den Öffnungshebel durch den Benutzer soll erfindungsgemäß selbsttätig das Verschließen veranlassen, und hierzu ist es unerwünscht, dass das innere Ventilelement als inneres Schließstück durch seine Oberflächenbeschaffenheit oder seine Oberflächengeometrie nicht mehr selbsttätig in den Ventilsitz zurückkehren kann, um die Getränkeausgabe zu beenden. Herunterfallen soll er ebenso wenig, was sich ergeben würde, wenn das äußere Betätigungselement in Richtung von der Behälterwand weg abgezogen würde,

Mit dem beanspruchten Verfahren wird das gespeicherte Getränk (oder das zu speichernde Getränk) dem Auslauf zugeführt, über den das Getränk dosiert abgegeben wird, gesteuert von der Funktion des äußeren Betätigungsstücks. Dazu ist oberhalb des Auslaufs, meist eines kanalförmigen Rohrs, eine Dichtungszone vorgesehen, die von dem inneren Schließstück durch Kraft beaufschlagt wird, betrachtet in Schließstellung. Diese Dichtungszone ist zur Seite des Inneren des Behälters, also auf der gespeicherten Getränkeseite. Entsprechend der Funktion des inneren Schließstücks als Ventilelement kann der Auslauf von dem inneren Schließstück abgedichtet werden, also verschlossen werden (Anspruch 2), oder freigegeben werden (Anspruch 1), zur Abgabe einer dosierten Menge des gespeicherten Getränks.

Das innere Schließstück ist magnetisch über Feldlinien gekoppelt zu einem äußeren Betätigungsstück. Sowohl das inneren Schließstück, das auf diese magnetische Kopplung anspricht, als auch das äußere Betätigungsstück sind auf den gegenüberliegenden Flächen der sie mechanische trennenden Wand abrollfähig und können in vertikaler Richtung sowohl nach oben rollen, wie auch nach unten abrollen (Anspruch 10). Die Umschreibung der geometrischen Form dieser beiden gekoppelten Stück, des inneren Schließstücks und des äußeren Betätigungsstücks, repräsentieren ihre Fähigkeit und Eignung, auf der Wand abzurollen oder so ausgebildet zu sein, dass sie abrollfähig sind, bezogen auf eine gegenständliche Beanspruchung (Anspruch 12).

Beide Stücke werden von der nicht-magnetischen und auch nicht-magnetisierbaren Wand getrennt, die zumeist aus einem Kunststoff, bevorzugt durchsichtig, gefertigt ist.

In der Arbeitsweise betätigt ein Anheben des äußeren Betätigungsstücks durch eine vertikal aufwärts gerichtete Abrollung eine ebensolche aufwärts gerichtete Abrollung des inneren Schließstücks. Wird das äußere Betätigungsstück in entgegen gesetzter Richtung nach unten abgerollt, also wieder abgesenkt, folgt ihm das innere Schließstück entsprechend der magnetischen Kopplung und ohne wesentliche Reibungseffekte zumindest an der inneren Oberfläche der die beiden Stücke trennenden, praktisch vertikalen Wand. Es kann dann direkt und selbst als Ventilelement dienen (Anspruch 7). Ebenso kann aber ein weiteres inneres Schließstück hinzutreten (Anspruch 8), das von dem ersten Stück in seiner Vertikalbewegung beeinflusst wird.

Abhängig von der Position des inneren Schließstücks in oder oberhalb der Dichtungszone, wird der Weg für das abzugebende Getränk freigegeben, oder gesperrt (Anspruch 1, Anspruch 2). Die beiden genannten Verfahrensabschnitte eines vollständigen Bewegungsablaufs sind zeitlich voneinander beabstandet (Anspruch 3), finden also nicht gleichzeitig statt. Das innere Schließstück ist ein magnetisch wirkender Körper, bevorzugt ein Vollmagnet, der bereits vormagnetisiert ist und nicht aus einem magnetisierbaren, meist eisenhaltigen Werkstoff hergestellt ist, der von einem Aktivmagnet angehoben werden kann (Anspruch 4).

Konkrete Formgestaltungen des inneren und äußeren Schließstücks sind in der einen oder anderen, also jeder beliebigen Kombination der folgenden Körper zu sehen, auch gleicher Körper (Zylinder/Kugel, Zylinder/Zylinder, etc....):
- Zylinder
- Kugel
- zur Mitte verjüngender Zylinder (Anspruch 6)
- jeder entweder als Vollelement oder als ein innen hohler Körper.

Alle Kombinationen von Körperpaaren sind offenbart (Ansprüche 5,16). Besonders bei einem Premixdispenser (Anspruch 17).

Wird ein Hohlelement verwendet (Anspruch 14), so kann dies bevorzugt für das innere Schließstück verwendet werden, wodurch das zugehörige Element leichter wird und einen erhöhten Auftrieb im Getränk erhält. Bevorzugt können auch zwei innere Schließstücke verwendet werden (Anspruch 8), die übereinander angeordnet sind, und wobei nur eines von diesen beiden Elementen die magnetische Kopplung durch die Behälterwand realisiert, dagegen das zweite, darunter liegende Element leichter ist und aus einem nicht magnetischen Werkstoff gefertigt sein kann, bevorzugt so mit einem inneren Hohlraum versehen, dass die Auftriebskraft dafür sorgen würde, dass sich das Ventil öffnet, wenn nicht das darüber angeordnete schwerere innere Schließstück diese Öffnung verhindern würde (Anspruch 13).

So werden die beiden inneren Schließstücke mechanisch berührend miteinander gekoppelt, und durch die magnetische Kopplung über die Gehäusewand beide inneren Schließstücke mit dem äußeren Betätigungsstück bewegt, eines mittelbar, eines unmittelbar.

Das tiefer liegende innere Schließstück ist dann das eigentliche Schließstück, welches die Ventilfunktion ausübt. Es ist leichter als Wasser gleichen Volumens und daher sorgt der Auftrieb für die Freigabe des Ausgabekanals und das Öffnen der Dichtungszone dann, wenn das höhere liegende innere Schließstück von dem äußeren Betätigungsstück angehoben wird.

Weiter bevorzugt kann das tiefer liegende innere Schließstück aus Kunststoff gefertigt sein und schwach elastisch nachgiebig ausgebildet werden, bevorzugt zusätzlich mit einer abdichtenden Oberfläche, die in ihrem Werkstoff an den Werkstoff der Dichtungszone angepasst ist, um eine bessere Abdichtung an der Berührstelle zu erhalten (Anspruch 9).

Die beschichtete Oberfläche und die Dichtungszonen sind so "komplementäre Werkstoffe", die zum Dichten geeignet aufeinander abgestimmt sind, beispielsweise beide aus Teflon.

Werden zwei übereinander liegende innere Schließstücke verwendet, kann ein die Bewegung der beiden koordinierendes inneres Wandstück ergänzt sein, das parallel zur Behälterwand, aber davon beabstandet angeordnet ist und sich ein Stück in vertikaler Richtung erstreckt (Anspruch 15).

Wird als geometrische Form für das äußere Stück und/oder das innere Stück ein sich zur Mitte verjüngender Zylinder verwendet, so ist die Behälterwand auf einem schmalen vertikalen Streifen bogenförmig ausgebildet, im Sinne eines sich vertikal erstreckenden Krümmungsprofils, das im Querschnitt kanalartig ausgebildet wird (Anspruch 6). Bei einer solchen Ausbildung der Wand ergibt sich eine Bahnführung (Anspruch 11) in vertikaler Richtung, die von einem Körperpaar so ausgenutzt werden kann, dass das innere Schließstück als Kugel ausgebildet ist und das äußere Betätigungsstück als der Zylinder mit einer zu seiner Mittelebene stetig laufenden Verjüngung, wobei die Mittelebene so definiert ist, dass sie senkrecht auf der Achse des Zylinders liegt, um welche der Zylinder abrollend gedreht wird, während er sich aufwärts und abwärts zur Übertragung einer Magnetkraft auf die innere Kugel bewegt.

Ausführungs**beispiele** erläutern und ergänzen die beanspruchte Erfindung. Die Ausführungsbeispiele sind nicht dazu gedacht, die beanspruchte Erfindung einschränkend zu verstehen, sie dienen der Erläuterung der zuvor allgemein umschriebenen Erfindung, die im Sinne der Ansprüche durch die allgemeine Beschreibung vor den Ausführungsbeispielen im Verständnis gestützt wird.
- **Figur 1**: ist ein Getränkebehälter im vertikalen Schnitt, in welchem sich ein Getränk 11 befindet, welches über eine Ausgabe 12 dosiert abgegeben wird. Der vertikale Schnitt ist so gelegt, dass alle Steuerelemente des Ventils 80, der Getränkebehälter und der Auslauf in der Schnittdarstellung ersichtlich sind.
- **Figur 2**: ist ein um 90° gedrehter Schnitt auf einer Höhe des vertikal ausgerichteten Auslaufs 12 mit einer Darstellung des inneren Schließstücks 13 in zwei vertikalen Positionen, der abdichtenden Schließlage und der den Auslauf freigebenden Öffnungslage.
- **Figuren 3**: zeigen in einer Teilansicht von oben jeweils die Aufsicht und in einem Schnitt entlang der Ebene A-A die genauere Form eines jeweiligen Körperpaares für inneres Schließstück und äußeres Betätigungsstück, bei Figur 3a eine innenliegende Kugel 23 und einen außen liegenden Zylinder 24. Bei Figur 3b ist eine innenliegende Kugel 33 und ein außen liegender Zylinder 24 mit einer zu seiner Mittelebene B-B ausgebildeten, bogenförmig verlaufenden Krümmung, wobei auch die Wand 10a einen Krümmungsabschnitt 10b als vertikal verlaufende Rinne besitzt.
- **Figur 4**: ist in perspektivischer Ansicht ein Getränkebehälter 10 mit einem Körperpaar aus zwei Zylindern 14,13 als inneres Schließstück und äußeres Betätigungsstück.
- **Figur 5**: ist derselbe Behälter 10 mit einem anderen Körperpaar aus innerem Zylinder als Schließstück und äußerer Kugel als Betätigungsstück.
- **Figur 6**: ist ein Körperpaar, wie in Figur 3b dargestellt, geführt von einer vertikalen Rinne 10b in der vorderen Behälterwand 10a.
- **Figur 6a**: ist ein abgewandeltes Beispiel der Figur 6 mit einem Körperpaar aus zwei Kugeln bei gleicher vertikaler Führungsrinne 10b in der vorderen Behälterwand 10a.
- **Figur 7**: zeigt ein weiter abgewandeltes Beispiel im vertikalen Schnitt mit zwei inneren Schließstücken, die gestapelt übereinander liegen und von denen das oben liegende magnetisch durch ein äußeres Betätigungsstück betätigt wird und seine Bewegung auf das darunterliegende zweite innere Schließstück 63 überträgt, das mehr Auftrieb besitzt und deshalb von unten gegen das innen, oben liegende Schließstück 13 drückt. Die Lage des oberen, inneren Schließstücks 13 bestimmt mittelbar über das darunterliegende innere Schließstück 63 die Funktion der Dichtung, geschlossen oder freigegeben.
- **Figur 7a**: ist eine perspektivische Darstellung des Prinzips von Figur 7 mit einer vertikalen Führungsrinne 10b nach Figur 6, angeordnet in der Wand 10a des Behälters 10.

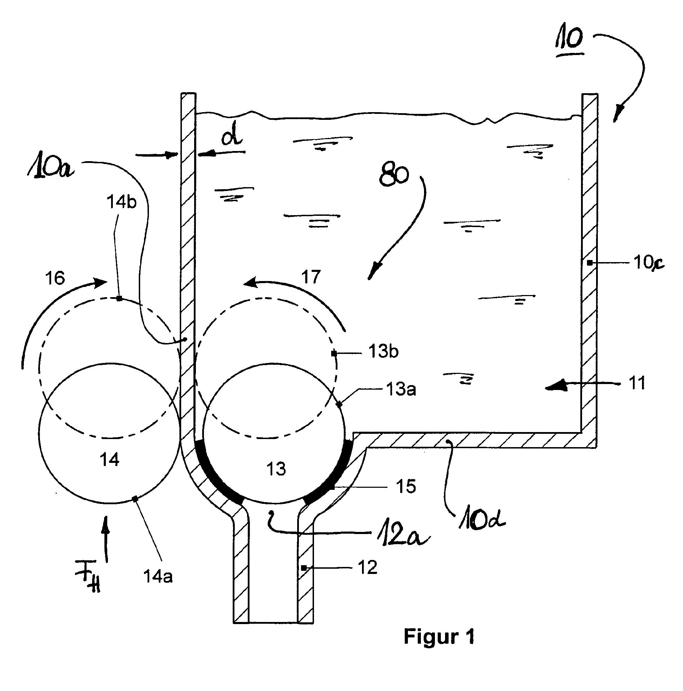

Figur 1 veranschaulicht den Getränkebehälter in vertikalem Schnitt, wie zuvor in der Übersicht angegeben. Der vertikale Schnitt ist so gewählt, dass alle an einer Ventilwirkung teilnehmenden Elemente ersichtlich sind und der Behälter 10 auch schematisch zu erkennen ist, der mit einem Premix-Getränk 11 gefüllt ist. Der Behälter 10 hat eine vordere Wand 10a und eine Rückwand 10c sowie einen Boden 10d. In den Boden ist eine Öffnung 12a eingebracht, die in ein Rohr 12 mündet.

Oberhalb des Endes des Rohres nahe dem Boden 10d und damit nahe dem oberen Ende des Rohres ist auf der Seite, die zum Inneren des Behälters zeigt, ein Dichtungssitz 15 schematisch dargestellt. Mit dem Dichtungssitz 15 wirkt ein Schließglied 13 zusammen, das in der Schließstellung (durchgezogen dargestellt) mit seiner äußeren Oberfläche die Dichtungszone 15 berührt und damit abdichtet. Dichtungszone, Auslauf und Schließglied 13 bilden ein Ventil 80, das in seiner steuernden Wirkung auf das Getränk 11 zu beschreiben ist.

Wird das Schließglied 13 aus seiner unteren Lage 13a (durchgezogene Linie) angehoben, durch eine rollende Bewegung 17 an, auf und in vertikaler Richtung entlang der inneren Oberfläche der Wand 10a, so öffnet sich das Ventil 80. Die äußere Oberfläche des Schließglieds 13 verlässt die Dichtungszone 15 und erlaubt es dem Getränk 11 durch den geöffneten Kanal 12 in einen Auslauf zu fließen, wo es von einem Benutzer abgefragt wird, der das Ventil 80 betätigt und dazu seinen Behälter in Form einer Tasse oder eines Bechers unter das nicht dargestellte untere, auslaufseitige Ende des Rohres 12 hält. Die obere Lage 13b (gestrichelt gezeigt) ist erreicht. Damit kann das gespeicherte Getränk 11 dosiert abgegeben werden.

Ein erneutes Rückführen des Schließglieds 13 aus der Öffnungslage 13b in die Ruhelage 13a sorgt für ein Sperren des Auslaufs, wenn die Oberfläche in der Stellung 13a wieder mit der Dichtungszone 15 in Berührung kommt.

Die Dichtungszone 15 ist geometrisch so gestaltet, dass die äußere Form des Schließglieds 13 kongruent ist, so dass durch das Gewicht des Schließgliedes 13 und die Schwerkraft die Schließfunktion sichergestellt werden kann.

Das Schließglied 13 dient der Freigabe der Dichtungszone ebenso, wie der Schließung der Dichtungszone, entweder durch Entfernen oder durch Berühren von der Dichtungszone 15.

Das Schließglied 13 war bislang allgemein als ein solches Ventilglied beschrieben und soll im Folgenden eine genauere geometrische Form bei der Erläuterung der Funktion erhalten. Bevor diese genauere Form aber erläutert wird, soll die Funktion der Einwirkung von außen auf das Schließglied 13 erläutert werden.

Dazu wird anhand der Figur 1 verdeutlicht, dass ein außen liegendes Betätigungsglied 14 ebenfalls vorgesehen ist, das über Feldlinien auf das innere Ventilglied 13 einwirkt. Diese Feldlinien sind nicht dargestellt, aber leicht vorstellbar, wenn das äußere Betätigungsglied 14 ein Permanentmagnet ist und das innere Ventilglied 13 ein magnetisierbarer Körper, insbesondere eisenhaltiger Körper ist, der auf Feldlinien anspricht und von diesen in Richtung der Feldlinien angezogen wird.

Ein vertikales Bewegen des äußeren Betätigungsglieds 14 aus der unteren Ruhelage 14a in eine angehobene Betätigungslage 14b geschieht durch eine Abrollbewegung 16, die auf der äußeren Oberfläche der nach vorne weisenden Behälterwand 10a stattfindet.

Sowohl das Ventilglied 13, wie auch das Betätigungsglied 14 können in vertikaler Richtung durch ihre äußere geometrische Gestaltung auf der vertikal verlaufenden Behälterwand 10a abrollen, ohne dass sie erhöhte Reibungskräfte durch Blockieren oder Rutschen auf der jeweiligen Oberfläche verursachen.

Besonders bevorzugt ist eine Ausbildung so, dass das innere Ventilglied 13 auch ein magnetischer Körper ist, so dass sich die Summe aus Feldlinien der beiden Körper 14, 13 als Ventilglied 13 und Betätigungsglied 14 addieren können. Dadurch wird die Kraft, die diese beiden durch die Wand 10a hindurch miteinander koppelt und ihre Bewegung voneinander abhängig macht, größer. Die Kraft kann ebenfalls größer gemacht werden, wenn die Dicke d der Wand 10a entsprechend reduziert wird. Dadurch, dass diese Wand aber aus relativ starkem Kunststoff ausgebildet ist, zumindest 1,5 mm stark auszubilden ist und optisch durchlässig sein soll, um einen Blick auf das Getränk 11 von vorne zu haben, ist die physische Nähe der beiden Körper 13,14 nicht immer sicherzustellen. Meist werden Abstände von oberhalb von 2,5 mm bis zumindest 3,5 mm Stärke benötigt, um die vertikale Wand mechanisch stabil genug auszuführen. Der Abstand der zumindest einseitig magnetischen Körper 13,14 wird so erhöht, aber bei zweiseitig ausgebildeten aktiven Magneten 13,14 kann die Kraft ausreichend verstärkt sein, um die Abrollbewegung 16 außerhalb des Getränkebehälters auf eine Anhebebewegung durch Abrollen 17 innerhalb des Getränkebehälters 10 zu übertragen.

Zur Einflussnahme auf die Ventilöffnung wird ein nicht dargestellter Hebel von einem Benutzer betätigt, der eine Hubkraft F_{H} auf den äußeren Körper 14 ausübt. Dadurch ergibt sich die abrollende Bewegung 16, das Anheben des Körpers aus der Schließlage 14a (Ruhelage) in die Öffnungslage 14b, bei entsprechender Folgebewegung des Abrollens 17 des inneren Ventilglieds 13.

Wenn zuvor die Ventilglieder aus Betätigungsglied und Ventilglied allgemein umschrieben wurden, so erhalten sie im Folgenden konkretere Namen. Der innere Ventilteil 13 kann als Schließstück ausgebildet sein, und der äußere Betätigungsteil als Steuer- oder Betätigungsstück, das auf der äußeren Oberfläche der Wand 10a aufwärts wie abwärts abrollfähig ist.

Die Fähigkeit abrollen zu können, haben nicht alle geometrischen Körper, sondern nur diejenigen, deren Oberfläche in Krümmungsrichtung relativ kontinuierlich verläuft. Die Krümmungsrichtung ist hierbei als die Umfangsrichtung um die zentrale Achse oder das Zentrum des jeweiligen Körpers anzunehmen. Ist die Oberfläche nicht vollständig kontinuierlich gekrümmt, beispielsweise geringfügig mit Facetten versehen, kann man auch noch von einer abrollenden Bewegung sprechen, die dann in einzelnen Schritten stattfindet, bei einer Überrollung über quer verlaufende Kanten, deren gegenseitiger Winkel aber nicht wesentlich von 180° abweicht. Im Gegensatz dazu ist beispielsweise ein Würfel mit einem Winkel von 90° an einer jeweiligen Kante nicht geeignet, aufwärts wie abwärts abgerollt zu werden, so dass dieser nur aufwärts wie abwärts rutschend bewegt werden kann, was eine erhebliche Reibungskraft zumindest an der äußeren Oberfläche der Wand 10a verursacht.

Die beiden Bewegungen können unabhängig voneinander und getrennt betrachtet werden, sie hängen nicht zwingend zusammen, wenngleich für einen vollständigen Zyklus aus Öffnen und Schließen zur Abgabe und zum Sperren der Abgabe beide Bewegungen verwendet werden. Patentrechtlich betrachtet sollen diese beiden Bewegungen aber unabhängig voneinander beschrieben und erläutert werden.

Beim Anheben muß die Gewichtskraft des inneren Ventilglieds 13 mit aufwärts bewegt werden, so dass die Hubkraft F_{H} sowohl den äußeren Körper 14, wie auch den inneren Körper 13 anheben muß und damit entsprechend groß ist. Die die Anhebebewegung unterstützende Auftriebskraft ist bei dem metallisch und magnetisierbar gestalteten inneren Ventilglied 13 als gering einzuschätzen, so dass die Hubkraft in erster Näherung die Summe der beiden Gewichtskräfte der beteiligten Körper 13,14 ist. Eine abrollende Bewegung 16 auf der äußeren Oberfläche der Wand 10a bringt keine oder zumindest kaum eine weitere Kraftkomponente hinzu, da diese Abrollbewegung ohne ein Gleiten oder Rutschen wenig Reibungskraft verursacht. Gleiches gilt für die Abrollbewegung 17 des inneren Ventilteils 13 im Behälter 10 oberhalb der Auslassöffnung 12a des Rohres 12 und der Dichtung 15.

Beim Absenken braucht keine zusätzliche Kraft verwendet zu werden. Dieser Vorgang wird allein dadurch eingeleitet, dass die Hubkraft F_{H} wegfällt. Dann bewegt sich der äußere Betätigungskörper 14 aus der angehobenen Lage 14b (strichliniert dargestellt) in entgegengesetzter Richtung des Pfeils 16 abwärts, allein gesteuert durch die Schwerkraft. Diese Schwerkraft findet auch Anwendung auf den inneren Körper 13, gebremst durch die Verdrängungsbewegung durch die Flüssigkeit und gesteuert von der abwärts gerichteten Bewegung des äußeren Körpers, der weiterhin magnetisch mit dem inneren Körper über entsprechend Feldlinien gekoppelt ist. Auch hier dreht sich die Richtung des Pfeils 17 für die Abwärtsbewegung um und der innere Körper 13 senkt sich aus der angehobenen Öffnungslage 13b in die Schließlage 13a ab. Dabei berührt er mit seiner Außenfläche den Ventilsitz 15 in einer Dichtungszone und sperrt den Auslauf für das Getränk 11.

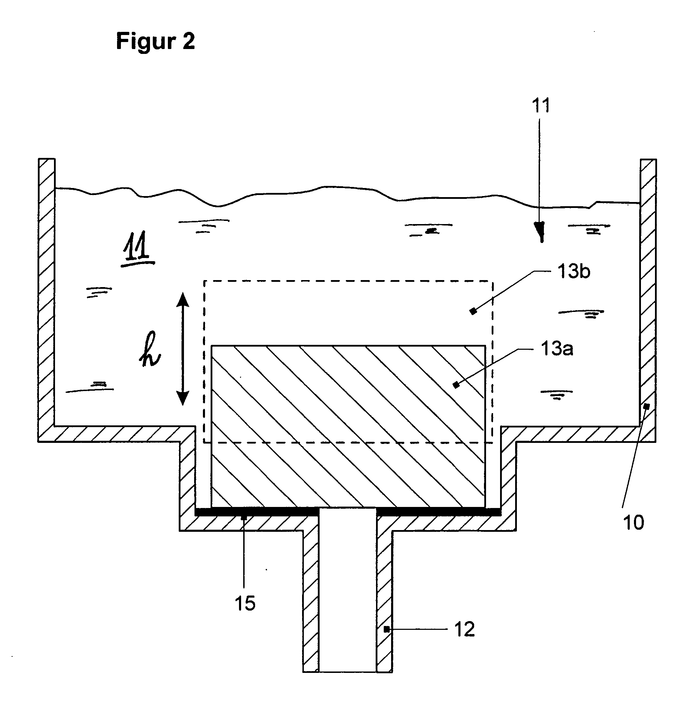

In einem Beispiel nach der Figur 2 kann der innere Körper 13 aus einem Zylinder bestehen, der um eine (von links nach rechts in Figur 2 verlaufende) Drehachse aufwärts bewegt wird. Diese Möglichkeit zeigt die Figur 2 in einer vertikalen Schnittebene, die senkrecht zu dem Schnitt von Figur 1 ist und das innere Schließstück 13 in den zwei Lagen zeigt, die nach Figur 1 mit 13a und 13b benannt wurden. Die Höhenrichtung h ist diejenige, die zum Öffnen und Beabstanden von der Dichtungszone 15 verwendet werden. Das Getränk läuft durch den Auslass 12.

Nicht dargestellt ist die abrollende Bewegung des Körpers 13 in Figur 2, die aber mit dem Bezugszeichen 17 aus Figur 1 sinngemäß ergänzt werden kann.

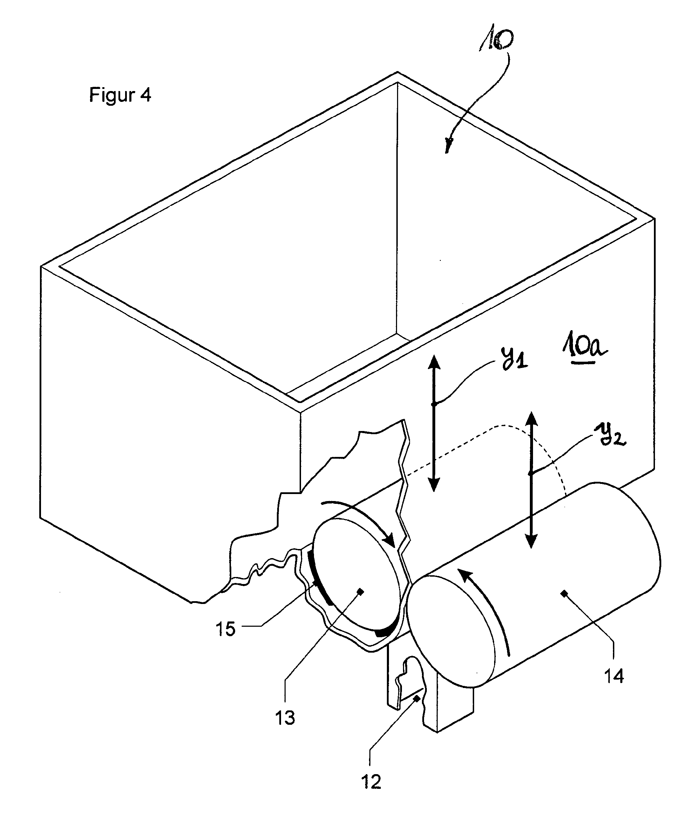

In einer weiteren Ausführung nach **Figur 4** wird auch der äußere Betätigungskörper 14 als ein Zylinder ausgebildet, der auf den in Figur 2 ersichtlichen Zylinder 13 als inneres Schließstück über Feldlinien magnetischer Art Einfluss nimmt. Der Auslauf 12, der Ventilsitz 15 als Dichtungszone und der Behälter 10 sind in Figur 4 perspektivisch dargestellt, wobei zur Übersichtlichkeit der Getränkeinhalt 11 herausgelassen wurde.

Die Abrollbewegungen 16,17 von Figur 1 sind auf die abrollfähigen Körper 13,14 übertragen und die jeweils korrespondierende Hubbewegung oder Absenkbewegung ist durch die vertikalen Pfeile y1,y2 referenziert. Beide Körper rollen auf der Wand 10a ab, ohne praktisch erhebliche Reibung.

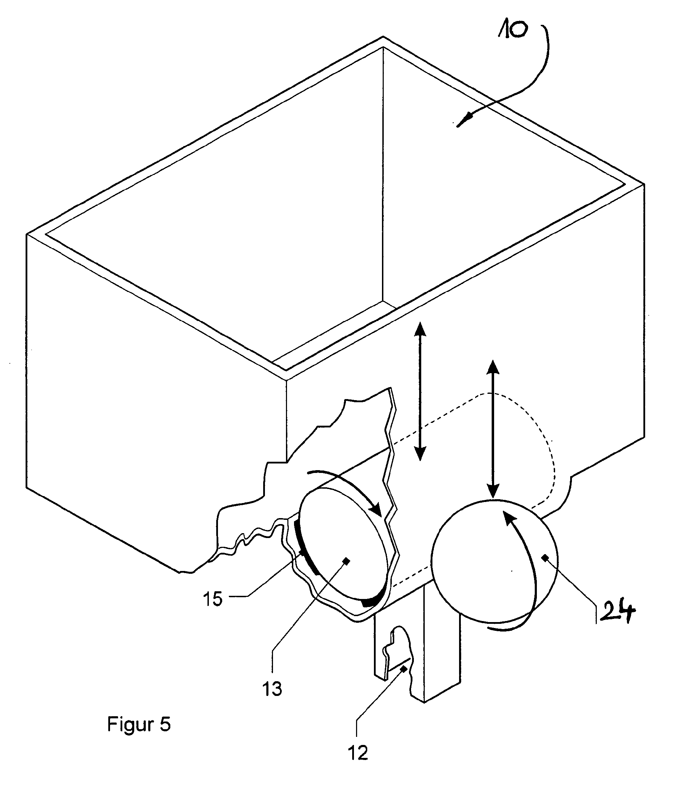

Eine Anwendung der abrollfähigen Körper nach Figur 1 auf die Ausführung nach Figur 5 zeigt, dass auch andere Körper hinsichtlich ihrer geometrischen Oberflächen in der Lage sind, die Hubbewegung und die Ventilfunktion zu erreichen.

Die Wand 10a ist dieselbe, die Hubbewegung y1,y2 (gegenläufig die Absenkbewegung) und die Abrollbewegung 16,17 können aus den vorhergehenden Zeichnungen systemkonform übernommen werden, nur die geometrische Form des äußeren Betätigungskörpers 24 ist verändert. Beide Körper 13,24 sind gleichwohl durch ihre Oberfläche auf der Wand 10a abrollfähig, was die Geometrie und Form dieser Körper ausreichend beschreibt.

Nicht dargestellt sind solche möglichen Formen, die polygonale Gestalt an der Oberfläche haben, beispielsweise einen Zylinder 13 oder 14 mit einer hohen Anzahl von Facetten am Umfang oder ähnliche geometrische Strukturen.

In entsprechender Anwendung der beschriebenen Beispiele können auch andere geometrische Formen und Kombinationen der zwei genannten Grundkörper aus Zylinder und Kugel eingesetzt werden, beispielsweise Figur 5 invertiert, oder auch ein Körperpaar aus zwei Kugeln, eine innen und eine außen.

Bevorzugt ist das innere Schließstück 13 auch ein aktiv magnetischer Körper, jedenfalls ist das äußere Betätigungsstück 14 ein aktiv magnetisierter Körper, von dem magnetische Feldlinien ausgehen.

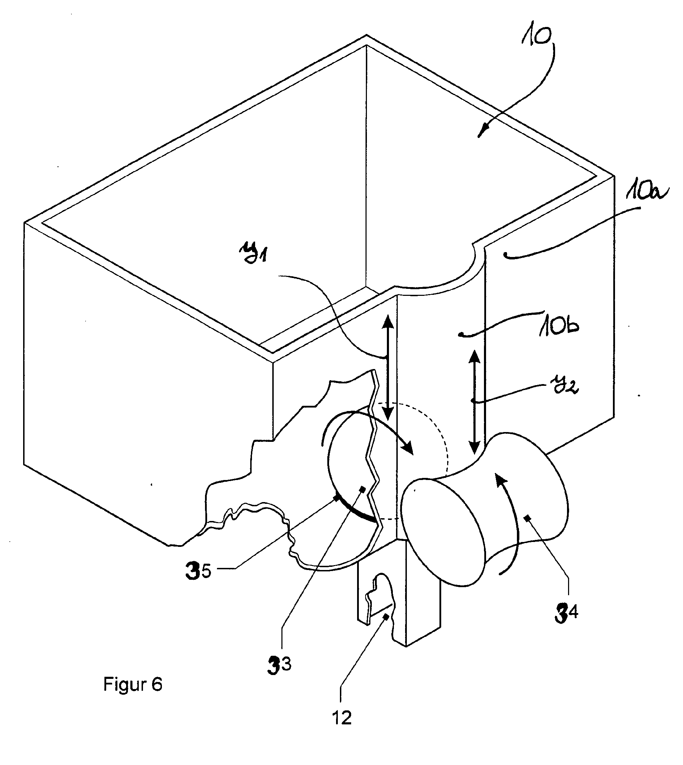

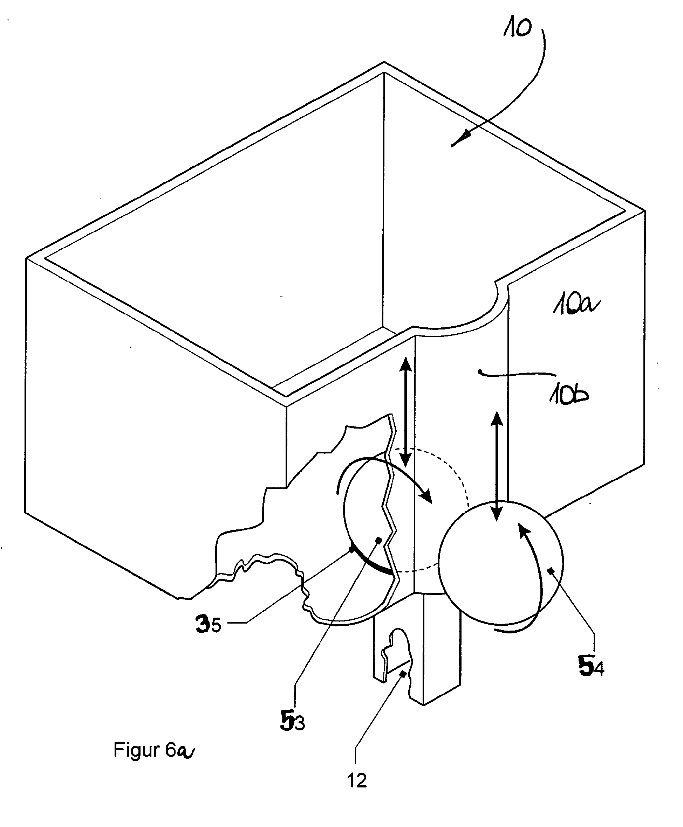

Eine weitere Formgebung von einem Körperpaar zeigt und erläutert Figur 6. Hier ist die Behälterwand 10a mit einer nach oben laufenden Rinne 10b versehen, deren Krümmung so ausgebildet ist, dass sie eine Kugel 33 als inneres Schließstück in vertikaler Richtung y1 zu führen vermag. Die Dichtungszone 35 ist entsprechend angepasst auf eine ringförmige Dichtungszone, gegenüber einer laminaren, langgestreckt parallelen Dichtungszone 15 von Figur 5. Auch der äußere abrollende Körper 34 hat eine Änderung erfahren, die es ihm mit seiner Mantelfläche erlaubt, von der selben Führungsrinne 10b in vertikaler Richtung y2 aufwärts geführt zu werden, bei wenig lateraler Versetzung, quer zur Anheberichtung. Dieser Zylinder 34 hat eine sich zur Mitte verdünnende Form und bewegt sich in einer rollenden Bewegung auf dem gebogenen Abschnitt 10b der Wand 10a. Die Krümmungsrichtung ist entlang der Bewegungsachse des mittig verjüngten Zylinders anzunehmen.

Die Figur 6 soll auch invertiert als weiteres, nicht dargestelltes Ausführungsbeispiel interpretiert werden, mit der zur Mittelebene sich verjüngenden Zylinderform 34 als innerer Körper und einer Kugel als äußerer Körper, wobei die Rinne 10b dann zur Innenseite des Getränkebehälters 10 gewölbt verläuft, aber weiterhin in vertikaler Richtung y1.

Eine Betrachtung aller Ausführungsbeispiele zeigt, dass die allgemeine Funktionsbeschreibung von Figur 1 ohne weiteres auf alle Beispiele ohne spezifische eigene Erläuterung übertragen werden kann und vom Fachmann sinngemäß so auch verstanden werden würde. Allein die Form der Dichtungszone 15 ist an die jeweilige Form der äußeren Oberfläche des inneren Schließglieds 13,33 anzupassen.

Erwähnt werden kann auch, dass alle Elemente oder einzelne der genannten Elemente in jeder beliebigen Kombination mit einem inneren Hohlraum ausgestattet werden können, beispielsweise für das innere Schließstück, um einen zugehörigen Auftrieb und eine zugehörige Auftriebskraft im abgesenkten Zustand dieses inneren Schließkörpers im Getränk zu erzeugen.

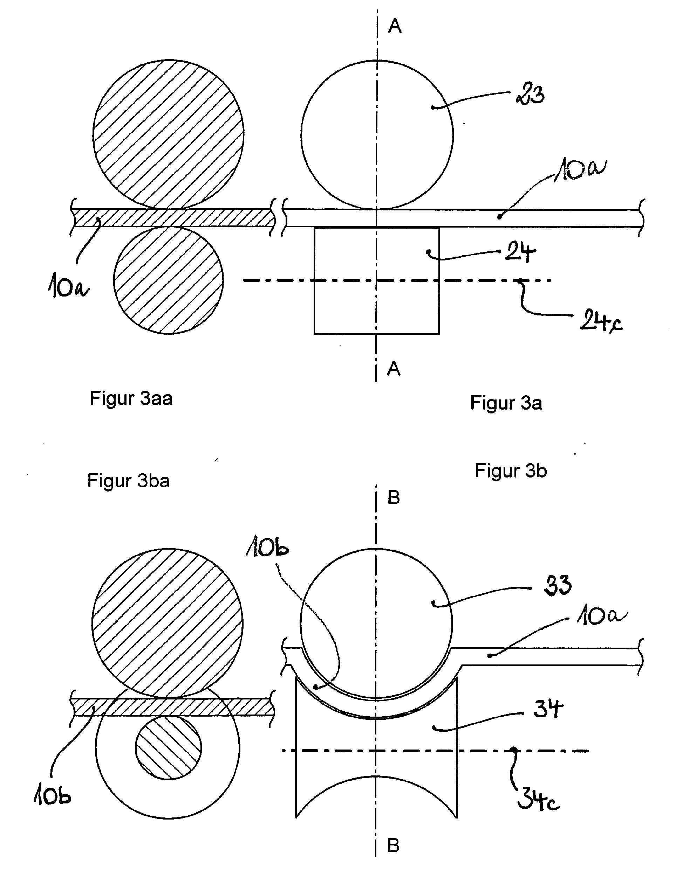

In einer weiteren schematischen Darstellung mit zwei jeweiligen Schnitten zeigen die **Figuren 3a und 3b** den Zustand des Abrollens auf der inneren Oberfläche und auf der äußeren Oberfläche der Wand 10a in Figur 3a bzw. der Rinnenform 10b in Figur 3b. In Figur 3a ist ein äußerer Zylinderkörper 24 vorgesehen, der um eine Achse 24c in vertikaler Richtung auf der Wand 10a abgerollt wird, und dabei die Ventilkugel 23 innerhalb des Behälters 10 in vertikaler Richtung mitnimmt. Dies gilt sowohl für die Bewegung nach aufwärts, wie für die Bewegung nach abwärts. Ein Schnitt entlang der Ebene A-A zeigt die Figur 3aa, aus der die vollständigen Formen des Körperpaars 23,24 ersichtlich werden.

Entsprechendes gilt für Figur 3b, hier zeigt sich die seitliche Führung der Rinne 10b, welche sowohl für die Ventilkugel 33 gilt, wie auch für den sich nach innen (zu seiner Achse) verjüngenden Zylinder 34 und seine Achse 34c, welche die Rollachse ist. Die Schnittebene B-B ist die Mittelebene des Zylinders 34 und in der Figur 3ba ist der Schnitt in dieser Ebene B-B ersichtlich. Die Trennung erfolgt jeweils über die zumindest 1,5 mm dicke Wand 10a, 10b, durch welche die Feldlinien des äußeren magnetischen Körpers aber jeweils durchdringen, um Kräfte in einer Richtung parallel zur Ebene A-A bzw. B-B ausüben zu können.

**Figur 6a** veranschaulicht das Beispiel von Figur 6, mit einer Änderung der Form des Körpers des äußeren Betätigungsstücks 54. Es ist hier als Kugel dargestellt. Alle übrigen Bewegungen und Funktionen können aus der Beschreibung der Figur 6 übertragen werden. Auch die Kugel 54 und die Kugel 53 sind beide auf den gegenüberliegenden Flächen der Rinne 10b in der Wand 10a abrollfähig, nach oben und nach unten.

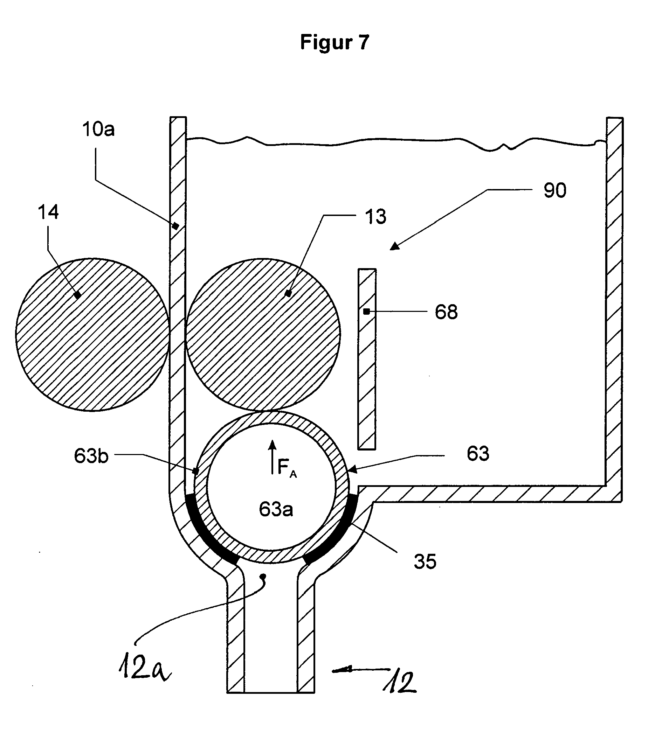

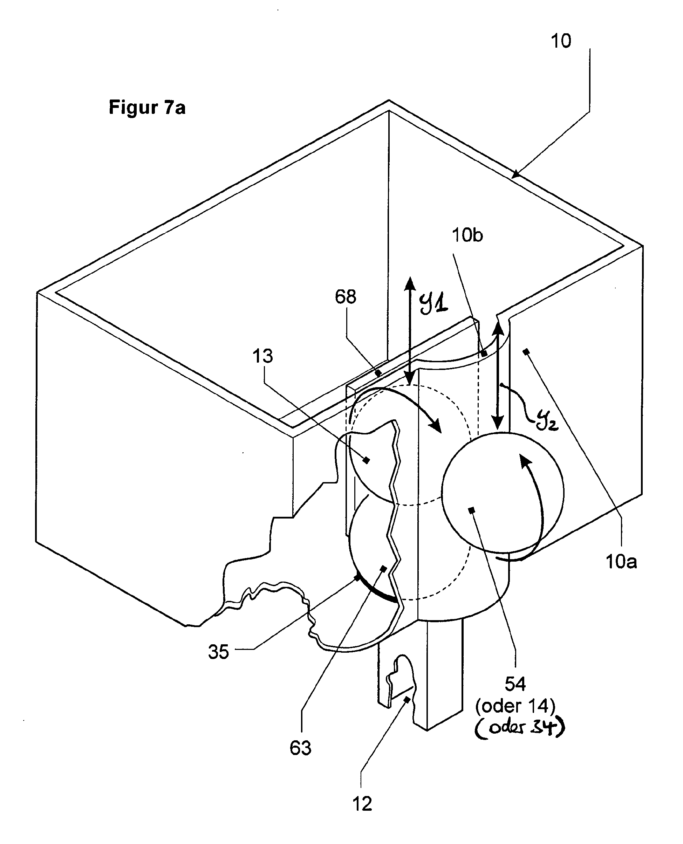

Ein weiteres Ausführungsbeispiel veranschaulicht die Figur 7, welche im Schnitt so angesiedelt ist, wie die Figur 1 (vertikaler Schnitt, bei dem alle Steuerelemente des Ventils, der Getränkebehälter und der Auslauf im Schnitt ersichtlich sind). Das Ventil ist hier modifiziert und insgesamt im Innenraum des Behälters 10 mit 90 benannt. Der Behälter 10 selbst, das eingefüllte Getränk 11 und die rohrförmige Abgabe 12 sind weiterhin gleich. Zum inneren Bestandteil des Ventils 90 gehören hier zwei vertikal übereinander gestapelte Körper, die unterschiedlich aufgebaut sind. Der obere Körper entspricht dem inneren Schließstück 13 der Figur 1 und kann in vertikaler Richtung an der Innenfläche der Behälterwand 10a aufwärts und abwärts abrollend bewegt werden, beeinflusst von den Feldlinien des außen liegenden Betätigungsstücks 14, welches ebenfalls aus Figur 1 in seiner Arbeitsweise entnommen werden kann.

Das unter dem inneren Schließstück 13 angeordnete weitere Schließstück 63 ist innen mit einem Hohlraum 63a versehen und hat bevorzugt eine äußere Oberfläche 63b, welche zum Dichten an die Dichtzone 35 oberhalb des Auslaufs 12 angepasst ist. Beispielsweise können beide Flächen aus Teflon ausgebildet sein, die Oberfläche 63b des unteren inneren Schließstücks 63 und die ringförmig ausgebildete Dichtungszone 35. Andere Werkstoffe sind dann einsetzbar, wenn sie zueinander in dem Sinne "komplementär" sind, die Dichtwirkung zu verbessern. Diese Dichtwirkung erzeugt sich aus dem Gewicht des oben angeordneten inneren Schließstücks 13, welches über die magnetische Kopplung nach außen in vertikaler Richtung bewegt werden kann und dabei für eine Sperrfunktion mit seinem Gewicht auf dem unten liegenden inneren Schließstück 63 aufliegt und bei einem Lösen dieses unten liegenden Schließstücks 63 nur aufwärts bewegt zu werden braucht, veranlasst durch eine abrollende Aufwärtsbewegung des außen liegenden Betätigungsstücks 14 (als Kugel 34 oder mittig verjüngter Zylinder 34, wie zuvor beschrieben).

Durch den inneren Hohlraum 63a kann das unten liegende Schließstück 63 über eine entstehende Auftriebskraft F_{A} selbsttätig von der Dichtzone 35 gelöst werden, respektive durch die Auftriebskraft wird es von selbst nach aufwärts bewegt, soweit es nicht durch das höher liegende und schwerere innere Schließstück 13 durch berührendes Anliegen angehalten wird. Durch die Auftriebskraft ist ein dauernder Druck vorhanden, der von dem unten liegenden inneren Schließstück 63 auf das darüber angeordnete innere Schließstück 13 wirkt.

Zur Stabilisierung der Richtung der Auftriebskraft kann eine zusätzliche Sperrwand 68 vorgesehen sein, die benachbart dem gestapelten Paar von Schließstücken 13,63 angeordnet ist, parallel zur Behälterwand 10a. Diese innenliegende Wand ist im Gehäuse innerhalb des Getränks fest angeordnet und hat einen Abstand von der inneren Oberfläche der Behälterwand 10a, der zumindest dem Durchmesser des größten der beiden inneren Schließstücke 13,63 entspricht, so dass bei der Abrollbewegung keine Reibung an dieser Wand 68 entsteht.

Nachdem keine magnetischen Einflüsse auf das untere Schließstück 63 ausgeübt werden müssen, kann es aus einem Kunststoff gefertigt sein, kann sogar schwach elastisch nachgiebig ausgebildet werden und hat bevorzugt die genannte Oberfläche 63b, welche es besonders für die Dichtfunktion ausbildet.

Die Wand 68 hat eine führende Funktion und vermeidet ein Ausweichen des unten liegenden inneren Schließstücks 63 gegenüber der von außen vorgegebenen Lage des oberen inneren Schließstücks 13, benötigt dabei aber kein Abrollen und keine Abrollbewegung auf der Innenfläche der Behälterwand 10a, da es durch die Auftriebskraft praktisch berührungslos in vertikaler Richtung bewegt werden kann.

Konkrete Formen der schematisch abgebildeten abrollfähigen Körper 13,14 und des Schließstücks 63 können aus der folgenden Beschreibung entnommen werden, unter Bezugnahme auf die Möglichkeiten, welche anhand der Figur 1 erläutert worden sind und welche in den Figuren 2, 3a, 4 und 5 vertieft wurden.

Das untere, die eigentliche Dichtfunktion ausübende Schließstück 63 kann bevorzugt kugelförmig ausgebildet sein, aber auch bei Anpassung der Dichtzone 35 in eine solche, wie sie als Dichtzone 15 zuvor beschrieben war, zylindrisch geformt sein. Für die über Feldlinien gekoppelten, darüber liegenden Körper 13,14 sind alle Möglichkeiten einsetzbar, welche ihre Abrollfähigkeit auf den gegenüberliegenden Flächen der Behälterwand 10a sicherstellen und ermöglichen, so Zylinder, Kugeln und andere rotationsfähige, abrollfähige Körper.

In entsprechender Anwendung der Rinnenbildung 10b aus den Figuren 6 und 6a kann das Ausführungsbeispiel der Figur 7 ebenfalls modifiziert werden, wobei eine dort vorgesehene Rinne 10b beide übereinander liegenden, inneren Schließstücke 63 und 13 in Aufwärtsrichtung führt, gegenüber der den Führungsspalt bildenden Wand 68, wie im Schnitt der Figur 7a gezeigt.

Der äußere Führungskörper kann dann - statt der dargestellten Kugel 54 - auch der zu seiner Mittelebene mit einer Krümmung in der Manteloberfläche ausgebildete Zylinder 34 sein. Die Abrollbewegung und die damit erreichten Aufwärts- und/oder Abwärtsbewegungen sind so, wie anhand der Bewegungsrichtung y1,y2 in der Figur 6 erläutert.

Die schematisch dargestellten Behälter 10 werden im konkreten Betrieb nach Füllung mit Getränk 11 vollständig abgedeckt, was zur Vereinfachung hier weggelassen wurde, um eine Konzentration der Erklärung auf die Funktion der Ventile 80,90 zu erreichen.

## Patentansprüche

1. **Verfahren zum Betreiben** eines Getränke-Ausgabesystems mit einem Behälter (10) für ein zu speicherndes Getränk und einem Auslauf (12), aus dem das gespeicherte Getränk dosiert abgebbar ist oder abgegeben wird, wobei beim Auslauf (12) zur Seite eines Inneren des Behälters (10) eine abdichtbare oder freigebbare Dichtungszone (15;35) vorgesehen ist, wobei
- ein **inneres Schließstück** (13;33) von einem äußeren Betätigungsstück (14;34) durch eine zumindest 1,5 mm starke Wand (10a) aus nichtmagnetischem und nicht magnetisierbarem Werkstoff getrennt ist;
- ein mechanisches Aufwärtsbewegen des äußeren **Betätigungsstücks** (14;34) als ein auf der Wand (10a,10b) abrollendes oder abrollfähiges Magnetstück diese Bewegung durch die Wand hindurch auf das innere Schließstück (13;33) überträgt,
wodurch das innere Schließstück ebenfalls durch eine abrollende Bewegung aufwärts bewegt wird, zur Freigabe der Dichtungszone (15;35) und Abgabe eines Volumenteils des gespeicherten Getränks.

2. **Verfahren zum Betreiben** eines Getränke-Ausgabesystems mit einem Behälter (10) für ein zu speicherndes und dosiert abzugebendes Getränk und mit einem Auslauf (12) am Behälter, aus dem das gespeicherte Getränk abgebbar ist oder abgegeben wird, wobei beim Auslauf (12) zur Seite des Inneren des Behälters eine freigebbare oder abdichtbare Dichtungszone (15;35) vorgesehen ist, wobei
- ein inneres Schließstück (13;33) von einem äußeren Betätigungsstück (14;34) durch eine zumindest 1,5 mm starke Wand aus einem nicht-magnetischem Werkstoff getrennt ist;
- ein mechanisches Bewegen des äußeren Betätigungsstücks als ein auf der Wand (10a) abrollendes Magnetstück eine abwärts gerichtete Bewegung durch die Wand (10a,10b) hindurch auf das innere Schließstück (13;33) überträgt, wodurch dieses durch eine oder in einer abrollende(n) Bewegung und vermittels einer auf das innere Schließstück wirkenden Schwerkraft ebenfalls abwärts bewegt wird, zur Schließung der Dichtungszone (15;35) und Sperren einer Abgabe des gespeicherten Getränks.

3. Verfahren nach Anspruch 1 und Anspruch 2, nicht gleichzeitig, sondern zeitlich voneinander beabstandet.

4. Verfahren nach Anspruch 1 oder Anspruch 2, wobei das innere Schließstück ein aktiv magnetisierter oder magnetischer Körper ist.

5. Verfahren nach Anspruch 1 oder Anspruch 2, wobei das innere Schließstück und das äußere Betätigungsstück ein Zylinder, eine Kugel und/oder ein sich zur Mitte verjüngender Zylinder sind, in zumindest einer von allen möglichen Kombinationen als ein jeweiliges Körperpaar.

6. Verfahren nach Anspruch 5, wobei das äußere Betätigungsstück ein sich zur Mitte verjüngender Zylinder (34) ist, der auf einem gebogenen Abschnitt (10b) der Wandfläche (10a) bei einer Bewegung nach oben und/oder unten abrollt, insbesondere seitlich bahngeführt.

7. Verfahren nach Anspruch 1 oder 2, wobei das innere Schließstück (13,33) die Dichtungszone (15;35) selbst berührend abdichtet oder selbst durch Lösen von der Berührung für einen Getränkefluss freigibt.

8. Verfahren nach Anspruch 1 oder 2, wobei ein weiteres inneres Schließstück (63) vorgesehen ist, das zwischen erstem inneren Schließstück (13,33) und Dichtungszone (15,35) angeordnet ist und so ausgebildet ist, dass es im untergetauchten Zustand im Getränk eine Auftriebskraft (F_{A}) erhält, die es von unten gegen das darüber gelegene innere Schließstück drückt (13).

9. Verfahren nach Anspruch 8, wobei der Werkstoff der Dichtungszone (15) auch auf der Oberfläche (63b) des weiteren Schließstücks (63) angebracht ist.

10. Verfahren nach einem der voranstehenden Ansprüche, wobei die abrollende oder abrollfähige Oberfläche im Wesentlichen kontinuierlich in Umfangsrichtung gekrümmt ist.

11. Verfahren nach einem der voranstehenden Ansprüche, wobei zumindest ein Körper des Körperpaars aus innerem ersten Schließstück und äußerem Betätigungsstück entlang und in einer vertikal gerichteten Rinne geführt ist (10b), die in der Behälterwand (10,10a) ausgebildet ist.

12. **Getränke-Ausgabesystem** mit einem Behälter (10) für ein zu speicherndes Getränk und einem Auslaufabschnitt (12), aus dem das gespeicherte Getränk dosiert abgebbar ist, wobei nahe dem Auslauf (12) zur Seite eines Inneren des Behälters (10) eine über ein inneres Schließstück (13;33) abdichtbare oder freigebbare Dichtungszone (15;35) vorgesehen ist,
wobei
- das innere Schließstück (13;33) und ein äußeres Betätigungsstück (14;34) durch eine aus nichtmagnetischem oder nicht magnetisierbarer Werkstoff gebildete Wand (10a,10b) physisch voneinander getrennt, aber magnetisch über Feldlinien koppelbar sind;
- das äußere Betätigungsstücks (14;34) und das innere Schließstück (13;33) jeweils eine auf der Wand (10a,10b) innen bzw. außen abrollende oder abrollfähige Oberfläche aufweisen, um eine im wesentlich senkrechte äußere abrollende Bewegung des äußeren Betätigungsstücks durch die Wand (10a,10b) hindurch auf das innere Schließstück (13;33) zu übertragen um dieses ebenfalls abrollend zu bewegen;
- beide Stücke (14,34;13,33) aus einem Feldlinien generierenden magnetischem Werkstoff ausgebildet sind;
zur Freigabe oder/und zum Sperren der Dichtungszone (15;35) und Steuerung der Abgabe des gespeicherten Getränks.

13. Getränke-Ausgabesystem nach Anspruch 12, wobei das innere Schließstück (13) selbst mit seiner Oberfläche (13a) oder mittelbar über ein weiteres, tiefer liegendes Schließstück (63) die Dichtungszone (15) freigibt oder zum Abdichten/Sperren berührt.

14. Getränke-Ausgabesystem nach Anspruch 13, wobei ein weiteres inneres Schließstück (63) vorgesehen ist, das zwischen erstem inneren Schließstück (13,33) und Dichtungszone (15,35) angeordnet ist und so ausgebildet ist, dass es im untergetauchten Zustand im Getränk eine Auftriebskraft (F_{A}) erhält, die es von unten gegen das darüber gelegene innere Schließstück drückt (13).

15. Getränke-Ausgabesystem nach Anspruch 14, wobei die beiden inneren Schließstücke (13,63) zwischen der Behälterwand (10a) und einer davon beabstandeten, fest angeordneten Führungswand (68) vertikal beweglich sind.

16. Getränke-Ausgabesystem nach einem der voranstehenden System-Ansprüche, wobei inneres Schließstück (13,33) und äußeres Schließstück (14,34) bestehen aus:
(a) zwei Zylindern (14,34) mit einer jeweils glatten Oberfläche;
(b) einer Kugel und einem Zylinder (13,24);
(c) zwei Kugeln (53,54);
(d) einem Zylinder (34) mit einer in Achsrichtung (34c) gewölbten Mantelfläche und einer Kugel (33).

17. Getränke-Ausgabesystem nach einem der voranstehenden Ansprüche, welches ein Premix-Dispenser ist, zur Aufnahme eines vorgemischten Fertiggetränks.

## Claims

1. **Process for operating a drinks-dispensing system** having a container (10) for a drink to be stored and an outlet (12), from which the stored drink can be discharged or is discharged in metered manner, wherein in the outlet (12) to the side of an interior of the container (10), a sealable or releasable sealing zone (15; 35) is provided, wherein
- an inner closing piece (13; 33) is separated from an outer actuating piece (14; 34) by an at least 1.5 mm thick wall (10a) of non-magnetic and non-magnetisable material;
- a mechanical upward movement of the outer actuating piece (14; 34) as a magnetic piece which rolls or can be rolled on the wall (10a, 10b) transfers this movement through the wall onto the inner closing piece (13; 33),
as a result of which the inner closing piece is likewise moved upwards by a rolling movement to release the sealing zone (15; 35) and discharge a volume part of the stored drink.

2. **Process for operating a drinks-dispensing system** having a container (10) for a drink to be stored and to be discharged in metered manner and having an outlet (12) on the container, from which the stored drink can be discharged or is discharged, wherein in the outlet (12) to the side of the interior of the container, a releasable or sealable sealing zone (15; 35) is provided, wherein
- an inner closing piece (13; 33) is separated from an outer actuating piece (14; 34) by an at least 1.5 mm thick wall of a non-magnetic material;
- a mechanical movement of the outer actuating piece as a magnetic piece which rolls on the wall (10a) transfers a downwardly directed movement through the wall (10a, 10b) onto the inner closing piece (13; 33), as a result of which the latter is likewise moved downwards by a or in a rolling movement and by means of a gravitational force acting on the inner closing piece, to close the sealing zone (15; 35) and block discharge of the stored drink.

3. Process according to claim 1 and claim 2, not at the same time, but temporally spaced from one another.

4. Process according to claim 1 or claim 2, wherein the inner closing piece is an actively magnetised or magnetic body.

5. Process according to claim 1 or claim 2, wherein the inner closing piece and the outer actuating piece are a cylinder, a sphere and/or a cylinder tapering towards the centre, in at least one of all possible combinations as a particular body pair.

6. Process according to claim 5, wherein the outer actuating piece is a cylinder (34) tapering towards the centre, which rolls upwards and/or downwards on a curved section (10b) of the wall surface (10a) during a movement, in particular guided laterally on a path.

7. Process according to claim 1 or 2, wherein the inner closing piece (13, 33) seals the sealing zone (15; 35) even in contacting manner or releases it for drinks flow even by releasing the contact.

8. Process according to claim 1 or 2, wherein a further inner closing piece (63) is provided, which is arranged between first inner closing piece (13, 33) and sealing zone (15, 35) and is designed so that in the submerged state in the drink it has a lifting force (F_{A}) which presses (13) it from below against the inner closing piece placed thereabove.

9. Process according to claim 8, wherein the material of the sealing zone (15) is also attached to the surface (63b) of the further closing piece (63).

10. Process according to one of the above claims, wherein the rolling or rollable surface is curved essentially continuously peripherally.

11. Process according to one of the above claims, wherein at least one body of the body pair comprising inner first closing piece and outer actuating piece is guided (10b) along and in a vertically directed groove which is formed in the container wall (10, 10a).

12. Drinks-dispensing system having a container (10) for a drink to be stored and an outlet section (12), from which the stored drink can be discharged in metered manner, wherein close to the outlet (12) to the side of an interior of the container (10), a sealing zone (15; 35) which can be sealed or released via an inner closing piece (13; 33) is provided, wherein
- the inner closing piece (13; 33) and an outer actuating piece (14; 34) are physically separated from one another by a wall (10a, 10b) formed from non-magnetic or non-magnetisable material, but can be coupled magnetically via field lines;
- the outer actuating piece (14; 34) and the inner closing piece (13; 33) have in each case a rolling or rollable surface on the inner or outer side of the wall (10a, 10b) in order to transfer an essentially vertical outer rolling movement of the outer actuating piece through the wall (10a, 10b) onto the inner closing piece (13; 33) in order to likewise move the latter in rolling manner,
- both pieces (14, 34; 13, 33) are formed from a magnetic material generating field lines;
to release and/or to block the sealing zone (15; 35) and control the discharge of the stored drink.

13. Drinks-dispensing system according to claim 12, wherein the inner closing piece (13) even with its surface (13a) or indirectly via a further, lower-lying closing piece (63) releases the sealing zone (15) or contacts it for sealing/blocking.

14. Drinks-dispensing system according to claim 13, wherein a further inner closing piece (63) is provided, which is arranged between first inner closing piece (13, 33) and sealing zone (15, 35) and is designed so that in the submerged state in the drink it has a lifting force (F_{A}) which presses (13) it from below against the inner closing piece placed thereabove.

15. Drinks-dispensing system according to claim 14, wherein the two inner closing pieces (13, 63) can be moved vertically between the container wall (10a) and a guide wall (68) arranged at a fixed distance therefrom.

16. Drinks-dispensing system according to one of the above system claims, wherein inner closing piece (13, 33) and outer closing piece (14, 34) consist of:
(a) two cylinders (14, 34) having in each case a smooth surface;
(b) a sphere and a cylinder (13, 24);
(c) two spheres (53, 54);
(d) a cylinder (34) having a shell surface which is curved in axial direction (34c) and a sphere (33).

17. Drinks-dispensing system according to one of the above claims, which is a premix dispenser for receiving a premixed finished drink.

## Revendications

1. Procédé d'actionnement d'un système de distribution de boisson comprenant un récipient (10) pour le stockage d'une boisson et une sortie (12), par laquelle la boisson stockée peut être délivrée ou est délivrée de manière dosée, dans lequel il est prévu, au niveau de la sortie (12), sur la face intérieure du récipient (10), une zone d'étanchéité scellable ou libérable (15 ; 35) et dans lequel :
- une pièce de fermeture interne (13 ; 33) est séparée d'une pièce de commande externe (14 ; 34) par une paroi (10a) d'une épaisseur d'au moins 1,5 mm constituée d'un matériau non magnétique et non magnétisable ;
- un déplacement mécanique ascendant de la pièce de commande externe (14 ; 34) sous la forme d'une pièce magnétique roulant ou capable de rouler sur la paroi (10a, 10b) transmet ce déplacement à travers la paroi à la pièce de fermeture interne (13 ; 33), ce qui provoque un déplacement ascendant de la pièce de fermeture interne également par un mouvement de roulement, pour libérer la zone d'étanchéité (15 ; 35) et délivrer une fraction de volume de la boisson stockée.

2. Procédé d'actionnement d'un système de distribution de boisson comportant un récipient (10) permettant de stocker une boisson et de délivrer de manière dosée une boisson et une sortie (12) sur le récipient, par laquelle peut être délivrée ou est délivrée la boisson stockée, dans lequel il est prévu, au niveau de la sortie (12), sur la face intérieure du récipient (10), une zone d'étanchéité scellable ou libérable (15 ; 35) et dans lequel .
- une pièce de fermeture interne (13 ; 33) est séparée d'une pièce de commande externe (14 ; 34) par une paroi (10a) d'une épaisseur d'au moins 1,5 mm constituée d'un matériau non magnétique ;
- un déplacement mécanique de la pièce de commande externe sous la forme d'une pièce magnétique roulant sur la paroi (10a) transmet un déplacement dirigé vers le bas à travers la paroi (10a, 10b) à la pièce de fermeture interne (13 ; 33), de sorte que celle-ci soit déplacée également vers le bas par ou dans un mouvement de roulement et sous l'effet d'une force de gravité exercée sur la pièce de fermeture interne, pour fermer la zone d'étanchéité (15 ; 35) et bloquer une distribution de la boisson stockée.

3. Procédés selon la revendication 1 et la revendication 2, mis en oeuvre non simultanément, mais avec un décalage mutuel dans le temps.

4. Procédé selon la revendication 1 ou la revendication 2, dans lequel la pièce de fermeture interne est un corps magnétisé activement ou magnétique.

5. Procédé selon la revendication 1 ou la revendication 2, dans lequel la pièce de fermeture interne et la pièce de commande externe sont un cylindre, une bille et/ou un cylindre s'amincissant vers le centre, dans au moins l'une quelconque de toutes les combinaisons possibles sous la forme d'une paire respective des dits corps.

6. Procédé selon la revendication 5, dans lequel la pièce de commande externe est un cylindre (34) s'amincissant vers le centre, qui roule sur une section incurvée (10b) de la surface de la paroi (10a) dans un déplacement vers le haut et/ou vers le bas, en particulier guidée latéralement sur la trajectoire.

7. Procédé selon la revendication 1 ou 2, dans lequel la pièce de fermeture interne (13, 33) étanche la zone d'étanchéité (15; 35) par simple contact ou la libère par simple relâchement du contact pour un écoulement de boisson.

8. Procédé selon la revendication 1 ou 2, dans lequel il est prévu une autre pièce de fermeture interne (63), qui est agencée entre la première pièce de fermeture interne (13, 33) et la zone d'étanchéité étanche (15, 35) et qui est conçue de manière à maintenir, à l'état immergé dans la boisson, une force ascensionnelle (F_{A}) qui la pousse par en bas contre la pièce de fermeture interne située au-dessus (13).

9. Procédé selon la revendication 8, dans lequel le matériau de la zone d'étanchéité (15) est également appliqué sur la surface (63b) de l'autre pièce de fermeture (63).

10. Procédé selon l'une quelconque des revendications précédentes, dans lequel la surface roulante ou capable de rouler est incurvée sensiblement en continu dans la direction périphérique.

11. Procédé selon l'une quelconque des revendications précédentes, dans lequel au moins un corps de la paire de corps constituée de la première pièce de fermeture interne et de la pièce de commande externe est guidé le long et à l'intérieur d'une goulotte (10b) orientée verticalement, qui est formée dans la paroi (10, 10a) du récipient.

12. Système de distribution de boisson comportant un récipient (10) pour une boisson à stocker et une section de sortie (12), à partir de laquelle on peut délivrer de manière dosée la boisson stockée, dans lequel il est prévu, près de la sortie (12), vers le côté de l'intérieur d'un récipient (10), une zone d'étanchéité scellable ou libérable (15 ; 35) via une pièce de fermeture interne (13 ; 33) et dans lequel :
- la pièce de fermeture interne (13 ; 33) et une pièce de commande externe (14 ; 34) sont séparées physiquement l'une de l'autre par une paroi (10a, 10b) constituée d'un matériau non magnétique ou non magnétisable, mais peuvent être couplées magnétiquement via des lignes de champ ;
- la pièce de commande externe (14 ; 34) et la pièce de fermeture interne (13 ; 33) présentent respectivement une surface roulant ou capable de rouler, à l'intérieur ou à l'extérieur, sur la paroi (10a, 10b) pour transférer un mouvement de roulement externe sensiblement vertical de la pièce de commande externe, à travers la paroi (10a, 10b), à la pièce de fermeture interne (13 ; 33) pour la déplacer également par roulement,
- les deux pièces (14, 34 ; 13, 33) sont constituées d'un matériau magnétique générant des lignes de champ ;
pour libérer ou/et bloquer la zone d'étanchéité (15 ; 35) et commander la distribution de la boisson stockée.

13. Système de distribution de boisson selon la revendication 12, dans lequel la pièce de fermeture interne (13) libère ou touche la zone d'étanchéité (15) pour la sceller/bloquer simplement avec sa surface (13a) ou indirectement, via une autre pièce de fermeture(63) située plus profondément.

14. Système de distribution de boisson selon la revendication 13, dans lequel il est prévu une autre pièce de fermeture interne (63) qui est agencée entre la première pièce de fermeture interne (13, 33) et la zone d'étanchéité (15, 35) et qui est conçue de manière à maintenir, à l'état immergé dans la boisson, une force ascensionnelle (F_{A}), qui la pousse d'en bas contre la pièce de fermeture interne située au-dessus (13).

15. Système de distribution de boisson selon la revendication 14, dans lequel les deux pièces de fermeture internes (13, 63) sont mobiles verticalement entre la paroi (10a) du récipient et une paroi de guidage (68) espacée de celle-ci, agencée de manière fixe.

16. Système de distribution de boisson selon l'une quelconque des revendications précédentes du système, dans lequel la pièce de fermeture interne (13, 33) et la pièce de fermeture externe (14, 34) sont constituées :
(a) de deux cylindres (14, 34) avec une surface respectivement lisse ;
(b) d'une bille et d'un cylindre (13, 24) ;
(c) de deux billes (53, 54) ;
(d) d'un cylindre (34) avec une surface extérieure bombée en direction axiale (34c) et d'une bille (33).

17. Système de distribution de boisson selon l'une quelconque des revendications précédentes, qui est un distributeur de mélange préparé pour recevoir une boisson pré-mélangée prête à la consommation.
